# EUROPEAN PATENT APPLICATION

(11) **EP 4 621 933 A1**
(43) Date of publication of application: **24.09.2025**
(21) Application number: 25165058.6
(22) Date of filing: 20.03.2025
(51) Int. Cl.: H01M 10/44, H02J 7/00, H01M 10/052, H01M 10/613, H01M 10/54

(54) **METHOD AND SYSTEM FOR DEACTIVATING SECONDARY BATTERIES**

(30) Priority: 22.03.2024 KR 20240039582
(71) Applicant: SAMSUNG SDI CO., LTD., Giheung-gu Yongin-si, Gyeonggi-do 17084 (KR)
(72) Inventor: KIM, Jake, Yongin-si, Gyeonggi-do 17084 (KR); KIM, Hongbeom, Yongin-si, Gyeonggi-do 17084 (KR)
(74) Representative: Michalski Hüttermann & Partner Patentanwälte mbB

(57) **Abstract**

A method of deactivating a secondary battery includes setting discharge conditions for a secondary battery having a positive voltage, connecting a current or voltage adjustable power source to the secondary battery, and overdischarging the secondary battery to a voltage minimum point, which is a negative voltage, by adjusting at least one of current or voltage of the current or voltage adjustable power source based on the discharge conditions.

## Description

### FIELD

Aspects of embodiments of the present disclosure relate to a method and system for deactivating secondary batteries.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Embodiments of the present disclosure provide a method and system for deactivating secondary batteries.

These and other aspects and features of the present disclosure will be described in or will be apparent from the following description of embodiments of the present disclosure.

A method of deactivating a secondary battery of the present disclosure may include setting discharge conditions for a secondary battery having a positive voltage, connecting a current or voltage adjustable power source to the secondary battery, and overdischarging the secondary battery to a voltage minimum point, which is a negative voltage, by adjusting at least one of current or voltage of the current or voltage adjustable power source based on the discharge conditions.

According to one embodiment, the overdischarging of the secondary battery to the voltage minimum point comprises overdischarging the secondary battery to the voltage minimum point at a constant current and/or a constant voltage based on the discharge conditions.

According to one embodiment, the discharge conditions comprise a C-rate of 0.25 C to 1.00 C.

According to one embodiment, the method further includes connecting a heat dissipation device to the secondary battery, before the overdischarging of the secondary battery to the voltage minimum point.

According to one embodiment, the heat dissipation device comprises at least one of a heat dissipation pad, a heat pump, or a heat dissipation fin.

According to one embodiment, the discharge conditions comprise a discharge pattern including one or more constant current discharge sections or constant voltage discharge sections, a magnitude of a discharge current, a discharge time, and a pause time.

According to one embodiment, the overdischarging of the secondary battery to the voltage minimum point comprises discharging the secondary battery for the discharge time based on the discharge pattern, and halting discharge of the secondary battery for the pause time based on the discharge pattern.

According to one embodiment, the discharge time is shorter than the pause time.

According to one embodiment, the discharge conditions further comprise a first potential and a second potential lower than the first potential, and the overdischarging to the voltage minimum point comprises discharging the secondary battery to the first potential at a first constant current, halting discharge of the secondary battery for the pause time, and discharging the secondary battery to the second potential at a second constant current.

According to one embodiment, a magnitude of the second constant current is smaller than a magnitude of the first constant current.

According to one embodiment, the discharge conditions further comprise a discharge target state of charge (SOC), and the method further comprises discharging the secondary battery to the discharge target state of charge, before the overdischarging to the voltage minimum point.

According to one embodiment, the method further includes removing an overdischarge protection circuit from the secondary battery, before the connecting of the current or voltage adjustable power source to the secondary battery.

According to one embodiment, an anode base material of the secondary battery comprises copper (Cu).

According to one embodiment, the voltage minimum point is lower than an elution potential of the anode base material.

According to one embodiment, the voltage minimum point is an inflection point where voltage of the secondary battery transitions from falling to rising during discharge of the secondary battery.

In some embodiments, there is provided a computer-readable non-transitory recording medium having instructions recorded thereon for executing the method, according to the embodiments described above, on a computer.

A system for deactivating a secondary battery of the present disclosure may include a setting part configured to set discharge conditions for a secondary battery having a positive voltage, a power source part of which current or voltage is adjustable and which is configured to supply power of a power source to the secondary battery, and a control part configured to control the secondary battery to overdischarge the secondary battery to a voltage minimum point, which is a negative voltage, by adjusting at least one of current or voltage of the power source based on the discharge conditions.

According to one embodiment, the control part controls the power source to overdischarge the secondary battery to the voltage minimum point at a constant current and/or a constant voltage based on the discharge conditions.

According to one embodiment, the system further includes a heat dissipation device configured to cool down the secondary battery during discharge of the secondary battery by dissipating heat.

According to one embodiment, the discharge conditions comprise a discharge pattern including one or more constant current discharge sections or constant voltage discharge sections, a magnitude of a discharge current, a discharge time, and a pause time.

According to some embodiments of the present disclosure, the activity of the secondary battery can be electrochemically removed without using a wet deactivation method in which the secondary battery is disintegrated and the activity of the active materials is removed using a brine. Through such dry disintegration of secondary batteries, waste batteries in a safe state at a level that does not require further removal of activity can be produced. Accordingly, in some embodiments, safe waste batteries can be obtained with ease.

According to some embodiments of the present disclosure, the heat resulting from overdischarge of the secondary battery can be reduced using a heat dissipation device and/or a predetermined discharge pattern. Further, according to this discharge pattern, by providing a pause time, such as in the middle of the overdischarge of the secondary battery, the overdischarge of the secondary battery can be performed in a shorter time and the heat of the secondary battery generated by the overdischarge can be reduced.

The features including those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 shows an example of a secondary battery deactivation method in accordance with some embodiments of the present disclosure.
FIG. 2 is a block diagram showing an exemplary internal configuration of the deactivation system in accordance with some embodiments of the present disclosure.
FIG. 3 is a diagram showing an exemplary internal configuration of a processor of the deactivation system in accordance with some embodiments of the present disclosure.
FIG. 4 is a diagram showing an example of a voltage and temperature profile when a secondary battery is overdischarged in accordance with some embodiments of the present disclosure.
FIG. 5 is a diagram showing an example in which a heat dissipation pad is connected to a secondary battery module in accordance with some embodiments of the present disclosure.
FIGS. 6 to 9 are diagrams showing examples of voltage and temperature profiles when a secondary battery is overdischarged based on discharge conditions in accordance with some embodiments of the present disclosure.
FIG. 10 is a flowchart showing an example of a secondary battery deactivation method in accordance with some embodiments of the present disclosure.
FIG. 11 is a flowchart showing an example of a secondary battery overdischarge method in accordance with some embodiments of the present disclosure.
FIG. 12 is a flowchart showing an example of a secondary battery overdischarge method in accordance with some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The term 'module' or 'part' as used herein refers to a software or hardware component, and the 'module' or 'part' performs certain roles. However, the 'module' or 'part' does not carry a meaning limited to software or hardware. The 'module' or 'part' may be configured to reside on an addressable storage medium or may be configured to run one or more processors. Therefore, as examples, the 'module' or 'part' may include at least one of components such as software components, object-oriented software components, class components, and task components, processes, functions, properties, procedures, subroutines, segments of program code, drivers, firmware, microcode, circuitry, data, databases, data structures, tables, arrays, or variables. The functionality provided within components and 'modules,' or 'parts,' may be combined into fewer components and 'modules,' or 'parts,' or may be further divided into additional components and 'modules,' or 'parts'.

According to some embodiments of the present disclosure, the 'module' or 'part' may be implemented with a processor and a memory. The 'processor' should be construed broadly to encompass general-purpose processors, central processing units (CPUs), microprocessors, digital signal processors (DSPs), controllers, microcontrollers, state machines, etc. In some contexts, the 'processor' may refer to application-specific integrated circuits (ASICs), programmable logic devices (PLDs), field programmable gate arrays (FPGAs), etc. The 'processor' may also refer to a combination of processing devices such as, for example, a combination of a DSP and a microprocessor, a combination of a plurality of microprocessors, a combination of one or more microprocessors in combination with a DSP core, or a combination of any other such components. Further, the 'memory' should be construed broadly to encompass any electronic component capable of storing electronic information. The 'memory' may also refer to various types of processor-readable media, such as random-access memory (RAM), read-only memory (ROM), non-volatile random-access memory (NVRAM), programmable read-only memory (PROM), erasable-programmable read-only memory (EPROM), electrically erasable PROM (EEPROM), flash memory, magnetic or optical data storage, registers, etc. The memory is said to be in electronic communication with a processor if the processor can read information from and/or write information to the memory. The memory, when integrated into a processor, is in electronic communication with the processor.

As described herein, secondary (or rechargeable) batteries may refer to batteries that are designed to be discharged and recharged. As the demand for secondary batteries increases, the number of secondary batteries that have reached the end of their service life (e.g., waste batteries) may also increase. These waste batteries may need to be disposed of safely because they can pose a risk of fire or explosion due to residual energy remaining inside. According to previous techniques, in order to dispose of a waste battery, the waste battery can be discharged by connecting a thermal resistor to the cathode and anode. However, because it may not be possible to obtain a safe waste battery simply by discharging the waste battery, a process to lower the activity of the active materials in the waste battery must be further performed using a brine. When such a wet deactivation method for waste batteries is used, environmental problems can occur due to the substances dissolved in the brine, resulting in a problem of worsening the working environment for workers.

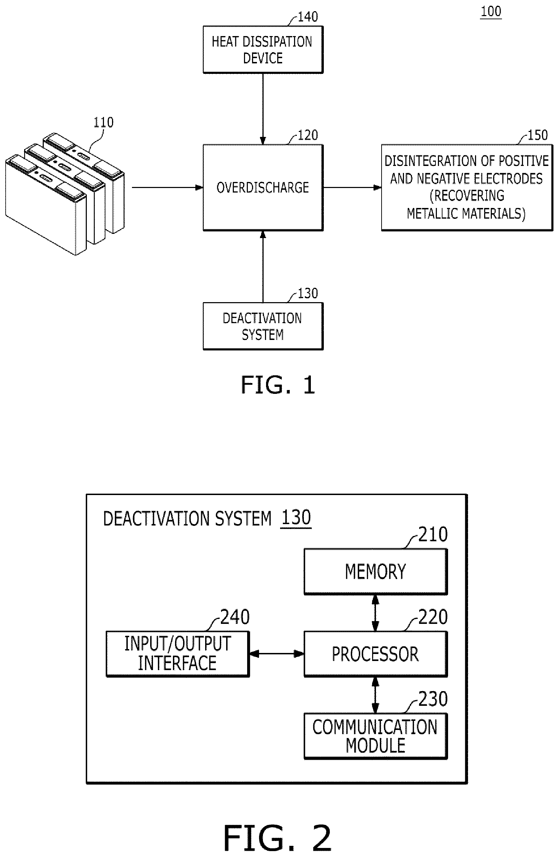

FIG. 1 shows an example of a secondary battery deactivation method 100 in accordance with some embodiments of the present disclosure. In some embodiments, the secondary battery deactivation method 100 may begin with a deactivation system 130 setting discharge conditions for a secondary battery 110 having a positive voltage, e.g., the secondary battery 110 containing residual energy. Here, in some embodiments, an overdischarge (over-discharge) protection circuit may be removed from the secondary battery. Further, a current or voltage adjustable power source included in the deactivation system 130 may be connected to the secondary battery 110. Here, the power source may refer to a discharge circuit in which a power supply and a resistor are connected in series, but is not limited thereto.

In some embodiments, the deactivation system 130 may overdischarge the secondary battery 110 to a voltage minimum point, which may be a negative voltage (at act 120), by adjusting at least one of the current or voltage of the power source based on the discharge conditions and maintaining the adjusted current or voltage for a certain period of time. For example, the deactivation system 130 may adjust the resistance value of the power source or adjust the current or voltage of the power supply of the power source. Here, in some embodiments, an anode base material of the secondary battery 110 may include copper (Cu). Further, the voltage minimum point may be lower than the elution potential of the anode base material, and may be an inflection point where the voltage of the secondary battery 110 drops to reach a minimum value and then transitions to rise during the discharge of the secondary battery 110. In other embodiments, the deactivation system 130 may perform overdischarge so that the current or voltage of the secondary battery 110 reaches a predetermined threshold (e.g., -0.5 V).

In some embodiments, the discharge conditions may include at least one of a discharge pattern including one or more constant current discharge sections or constant voltage discharge sections, the magnitude of a discharge current, a discharge target potential, a discharge target state of charge (SOC), a discharge time, and a pause time. In this case, the deactivation system 130 may overdischarge the secondary battery 110 at a constant current and/or a constant voltage to the voltage minimum point based on the discharge conditions. In other embodiments, the deactivation system 130 may discharge the secondary battery 110 for a predetermined discharge time and then halt discharging the secondary battery 110 for a predetermined pause time, based on the discharge pattern. Further, the deactivation system 130 may perform the overdischarge of the secondary battery 110 by repeating this discharge pattern two or more times. Here, in some embodiments, the discharge time may be shorter than the pause time, but is not limited thereto.

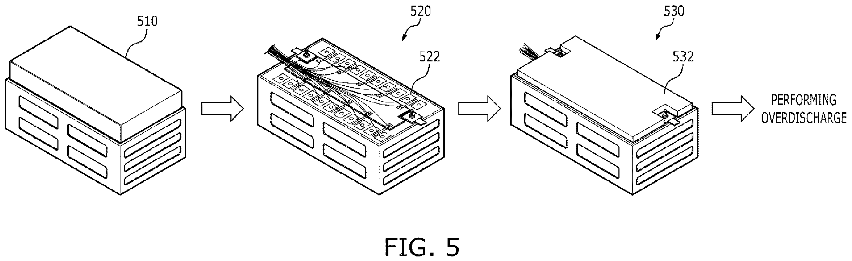

In some embodiments, a heat dissipation device 140 may be connected to the secondary battery 110. Here, the heat dissipation device 140 may include at least one of a heat dissipation pad, a heat pump, or a heat dissipation fin. This heat dissipation device 140 can cool down the heat generated by the overdischarge of the secondary battery 110. An example of a configuration in which a heat dissipation device is connected to a secondary battery will be described in detail later with reference to FIG. 5.

In some embodiments, by overdischarging the secondary battery 110, positive and negative electrodes of the secondary battery may be electrochemically disintegrated (at act 150). For example, through the overdischarge of the secondary battery 110, the metallic materials contained in the positive and negative electrodes can be eluted and recovered. Further, through the overdischarge of the secondary battery 110, a lithium compound which may be present in the form of a solid electrolyte interphase (SEI) layer on the surface of the anode active material may be removed, and at the same time, copper, which may be the anode base material, may be eluted and the activity of the secondary battery 110 may be removed. Accordingly, a deactivated safe waste battery can be produced.

With this configuration, the activity of the secondary battery can be electrochemically removed (deactivated) without using a wet deactivation method in which the secondary battery is disintegrated and the activity of the active materials is removed using a brine. Through such dry disintegration of secondary batteries, waste batteries can be produced in a safe state at a level that does not require further removal of activity. Accordingly, safe waste batteries can be obtained with ease.

FIG. 2 is a block diagram showing the internal configuration of the deactivation system 130 according to some embodiments. The deactivation system 130 may include a memory 210, a processor 220, a communication module 230, and an input/output interface 240. The deactivation system 130 may be configured to be able to communicate information and/or data with external systems over a network using the communication module 230.

The memory 210 may include any non-transitory computer-readable recording medium (or storage medium). According to some embodiments, the memory 210 may include a permanent mass storage device, such as read-only memory (ROM), a disk drive, a solid-state drive (SSD), flash memory, etc. As another example, the permanent mass storage device, such as ROM, SSD, flash memory, a disk drive, etc., may be included in the deactivation system 130 as a separate persistent storage device distinct from the memory. Further, the memory 210 may store an operating system and at least one program code (e.g., code for executing the overdischarge of the secondary battery, which may be installed in and may run on the deactivation system 130, etc.).

These software components may be loaded from a computer-readable recording medium separate from the memory 210. Such a separate computer-readable recording medium may include a recording medium directly connectable to the deactivation system 130, and may include, for example, computer-readable recording media such as floppy drives, disks, tapes, DVD/CD-ROM drives, and memory cards. As another example, the software components may be loaded into the memory 210 via the communication module 230 rather than a computer-readable recording medium. For example, at least one program may be loaded into the memory 210 based on a computer program (e.g., a program for executing the overdischarge or the like of the secondary battery, etc.) installed by files provided via the communication module 230 by developers or a file distribution system that distributes application installation files.

The processor 220 may be configured to process instructions of a computer program by performing basic arithmetic, logic, and input/output operations. The instructions may be provided to a user terminal (not shown) or other external systems by the memory 210 or the communication module 230. For example, the processor 220 may overdischarge the secondary battery to a voltage minimum point, which is a negative voltage, by setting discharge conditions based on data received via the input/output interface 240 or the communication module 230 or data stored in the memory 210 and adjusting at least one of the current or voltage of the power source based on the discharge conditions. Further, the processor 220 of the deactivation system 130 may be configured to manage, process, and/or store information and/or data received from a plurality of user terminals and/or a plurality of external systems.

The communication module 230 may provide a configuration or function for the user terminal (not shown) and the deactivation system 130 to communicate with each other via a network and may provide a configuration or function for the deactivation system 130 to communicate with external systems (for example, a separate cloud system, etc.). As one example, control signals, instructions, data, etc., provided under the control of the processor 220 of the deactivation system 130 may be transmitted to the user terminal and/or external systems via communication modules of the user terminal and/or external systems by way of the communication module 230 and the network. For example, the deactivation system 130 may receive data on the discharge conditions from the user terminal via the communication module 230, or may transmit voltage, temperature, etc., measured during the overdischarge of the secondary battery to the user terminal.

Further, the input/output interface 240 of the deactivation system 130 may be a means for interfacing with devices (not shown) for input or output that may be connected with the deactivation system 130 or that the deactivation system 130 may include. The input/output interface 240 is shown as an element configured separately from the processor 220 in FIG. 2 but is not limited thereto, and the input/output interface 240 may be configured to be included in the processor 220. The deactivation system 130 may include more components than those of FIG. 2. However, for simplicity, most of the conventional components are not shown.

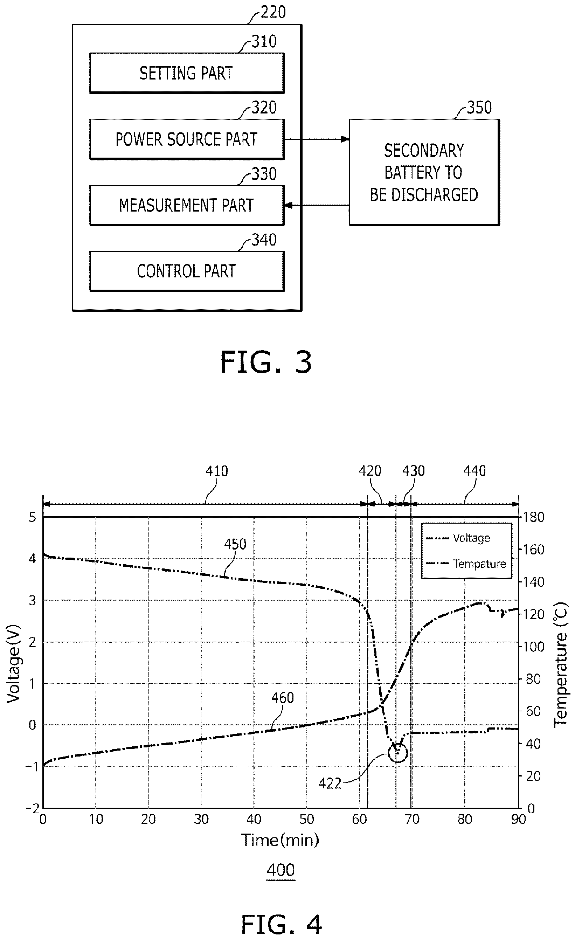

FIG. 3 is a diagram showing the exemplary internal configuration of the processor 220 of the deactivation system in accordance with some embodiments of the present disclosure. In some embodiments, the processor 220 may include a setting part 310, a power source part 320, a measurement part 330, and a control part 340. The internal configuration of the processor 220 of the deactivation system shown in FIG. 3 is merely one example and may be implemented differently. For example, at least some components of the processor 220 may be omitted or other components may be added, and at least some operations or processes performed by the processor 220 may be performed by a processor of a user terminal that is communicatively connected to the deactivation system.

The setting part 310 may set discharge conditions for a secondary battery having a positive voltage. In some embodiments, the discharge conditions may include a discharge pattern including one or more constant current discharge sections or constant voltage discharge sections, the magnitude of a discharge current, a discharge time and a pause time, a discharge target potential, a discharge target state of charge (SOC), etc. These discharge conditions may be received from the user (or user terminal), or may be predetermined and stored depending on the type or model of the secondary battery. In other embodiments, the discharge conditions may be set and changed in real-time based on the residual energy (including current and/or voltage) and heating temperature of the secondary battery 350 to be discharged measured by the measurement part 330.

The power source part 320 may supply a power source or supply power of the power source (of which current and/or voltage is adjustable) to the secondary battery for discharging the secondary battery 350 to be discharged according to the discharge conditions or a control signal from the control part 340. Here, the power source part 320 may adjust the magnitude or duration of the current and/or voltage of the power source to discharge the secondary battery 350 to be discharged. Further, the power source part 320 may interrupt the power supply to the secondary battery 350 to be discharged.

The measurement part 330 may measure data such as temperature, voltage, and current of the secondary battery 350 to be discharged using a temperature sensor, a voltage sensor, a current sensor, etc. Further, the measurement part 330 may transmit the measured data to the control part 340. Moreover, the measurement part 330 may visualize (e.g., provide) the measured data in a graph and output it on a display of the deactivation system.

The control part 340 may control the secondary battery to overdischarge the secondary battery 350 to be discharged to a voltage minimum point, which is a negative voltage, by adjusting the magnitude or duration of the current and/or voltage of the power source supplied by the power source part 320 based on the discharge conditions. For example, the control part 340 may control the power source to overdischarge the secondary battery 350 to be discharged to the voltage minimum point at a constant current and/or a constant voltage based on the discharge conditions. For example, the discharge conditions may include a C-rate of 0.25 Capacity (C) to 1.00 C.

In some embodiments, the control part 340 may overdischarge the secondary battery 350 to be discharged by repetitively performing two or more times of discharging the secondary battery 350 to be discharged for the discharge time and halting the discharge for the pause time, based on the discharge pattern. The control part 340 can cool down the heat generated by the secondary battery 350 to be discharged due to the discharge for a certain period of time by halting the discharge for the pause time. Here, in some embodiments, the discharge time may be shorter than the pause time.

In some embodiments, the control part 340 may overdischarge the secondary battery 350 to be discharged based on the discharge target potential. For example, the control part 340 may discharge the secondary battery 350 to be discharged at a first constant current to a first potential. Thereafter, the control part 340 may halt the discharge for the pause time. Further, the control part 340 may discharge the secondary battery 350 to be discharged at a second constant current to a second potential. Here, the magnitude of the second constant current may be smaller than that of the first constant current.

In some embodiments, the control part 340 may control a heat dissipation device included in the deactivation system to cool down the heat generated during the discharge of the secondary battery 350 to be discharged such as by dissipating heat. Here, the heat dissipation device may include not only a heat dissipation pad, a heat pump, or a heat dissipation fin that is directly connected to the secondary battery 350 to be discharged, but also an air convection device, a liquid convection device, etc., for cooling down the heat outside the secondary battery 350 to be discharged.

FIG. 4 is a diagram showing an example of a voltage and temperature profile 400 when a secondary battery is overdischarged in accordance with some embodiments. The illustrated voltage and temperature profile 400 is an example showing changes in voltage 450 and temperature 460 when a 37 ampere-hour (Ah) prismatic secondary battery is continuously discharged at a constant 1 C current. The first section 410 represents a section in which secondary batteries are generally used. Here, the secondary battery may have a voltage of about 4.1 volts (V) to 2.7 V.

In some embodiments, the voltage of the secondary battery may be reduced by discharging the secondary battery. The second section 420 represents a section in which the secondary battery is discharged to a voltage minimum point 422. Here, the voltage of the secondary battery may decrease rapidly to the voltage minimum point (about -1.0 V). This voltage minimum point converges to 0 V as the difference in electromotive force between the positive and negative electrodes gradually decreases, but may become a negative voltage because the internal resistance of the secondary battery gradually increases. Further, the voltage minimum point may have a different negative voltage value depending on the cathode active materials or anode active materials included in the secondary battery.

In some embodiments, metallic materials contained in the anode or cathode of the secondary battery may be eluted in the vicinity of the voltage minimum point 422. The third section 430 represents a section in which the metallic materials are eluted. In this section, lithium intercalation/deintercalation reactions rarely occur in the cathode active materials and anode active materials, and copper (Cu), which is the anode base material, may be eluted. As the eluted copper ions precipitate, an internal short circuit may occur between the cathode and anode of the secondary battery. Accordingly, the internal resistance of the secondary battery may be reduced as the current applied to the secondary battery passes directly through the cathode and anode. In this case, the voltage of the secondary battery may rise to about 0 V.

In some embodiments, residual energy of the secondary battery may leak through overdischarge. The fourth section 440 represents a section in which the current applied to the secondary battery leaks due to an internal short circuit formed by the eluted copper. In this section, because the activity of the secondary battery has been removed, the supply of the power source to the secondary battery may be cut off. Accordingly, the waste battery may be prepared in a deactivated state.

In some embodiments, as the secondary battery is used and discharged, the temperature of the secondary battery may increase continuously. For example, in the second section 420 and the third section 430, the temperature of the secondary battery increases rapidly, which may in turn compromise the safety of the waste battery. In order to obtain a safer waste battery, the heat generated in the secondary battery can be reduced by connecting a heat dissipation device to the secondary battery or by overdischarging the secondary battery using a predetermined discharge pattern. Examples of reducing the heat caused by the overdischarge of the secondary battery will be described in detail later with reference to FIGS. 5 to 9.

FIG. 5 is a diagram showing an example in which a heat dissipation pad 532 is connected to a secondary battery module 510 in accordance with some embodiments. The method of deactivating a secondary battery of the present disclosure can be applied not only to single cells but also to modules and module packs that are aggregates of a plurality of cells. In some embodiments, the cover of the secondary battery module 510 may be removed. Thereafter, the overdischarge protection circuit mounted on the secondary battery module 510 may be removed.

The first image 520 shows an example in which the cover of the secondary battery module 510 has been removed and then the overdischarge protection circuit has been removed, and the second image 530 shows an example in which the heat dissipation pad 532 is attached to the secondary battery module where the overdischarge protection circuit has been removed at the top of the secondary battery module 510. In some embodiments, the secondary battery module 510 may include a plurality of cells 522. Here, in some embodiments, the plurality of cells 522 may be connected in series, but the disclosure is not limited thereto. Further, the heat dissipation pad 532 may be attached in place of the overdischarge protection circuit installed on the top of the secondary battery module 510. In this configuration, if the deactivation system is connected to the secondary battery module 510 and overdischarge is performed, the heat generated in the secondary battery module 510 can be cooled down effectively.

The heat dissipation pad 532 is shown as connected to the secondary battery module 510 in FIG. 5, but the disclosure is not limited thereto. For example, by having other forms of heat dissipation devices different from the heat pump, heat dissipation fin, etc., connected to the secondary battery module 510, or by installing an air convection device such as a fan, etc., a convection device using a liquid, etc., around the secondary battery module 510, the heat generated during the discharge process of the secondary battery module 510 may be cooled down and/or dissipated.

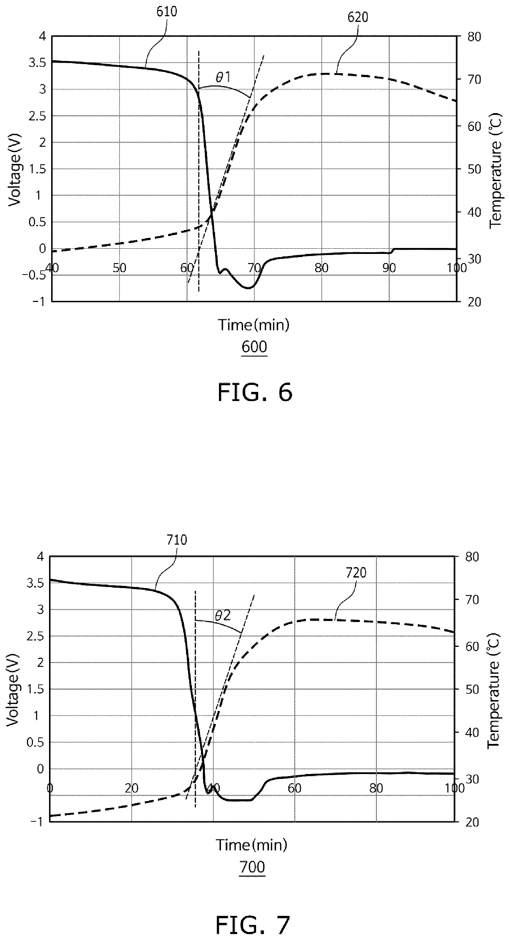

FIGS. 6 to 9 are diagrams showing examples of voltage and temperature profiles 600, 700, 800, and 900 when a secondary battery is overdischarged based on discharge conditions in accordance with some embodiments of the present disclosure. In some embodiments, the discharge conditions set in the deactivation system may include a discharge pattern including one or more constant current discharge sections or constant voltage discharge sections, the magnitude of a discharge current, a discharge target potential, a discharge time, and a pause time. Based on these discharge conditions, the secondary battery may be overdischarged to a voltage minimum point (about -0.5 V to -1.0 V). Further, a heat dissipation device may be connected to the secondary battery in order to cool down and/or dissipate the heat generated in the secondary battery while the overdischarge of the secondary battery is in progress.

Referring to FIG. 6, the voltage and temperature profile 600 is an example profile showing changes in voltage 610 and temperature 620 of a secondary battery module (e.g., secondary battery module 510 in FIG. 5) in a 100% state of charge (SOC) when a heat dissipation device is connected to the secondary battery module and the secondary battery module is discharged at a constant 1 C current. In this case, the peak of temperature 620 generated by overdischarging the secondary battery may correspond to about 71 degrees. For instance, by applying the heat dissipation device and the constant current discharge condition, the heat in the secondary battery generated by the overdischarge can be reduced.

Referring to FIG. 7, the voltage and temperature profile 700 is an example profile showing changes in voltage 710 and temperature 720 of a secondary battery module (e.g., secondary battery module 510 in FIG. 5) when the secondary battery module is discharged at a constant 0.5 C current using the deactivation system. In this case, the secondary battery module may be overdischarged after being discharged to a discharge target state of charge (e.g., 20% SOC). In this case, the peak of temperature 720 generated by overdischarging the secondary battery can be reduced to about 65 degrees even without connecting a heat dissipation device, unlike in FIG. 6 which shows results of applying a heat dissipation device. For example, the heat of the secondary battery generated by the overdischarge can be reduced under a lower constant current discharge condition.

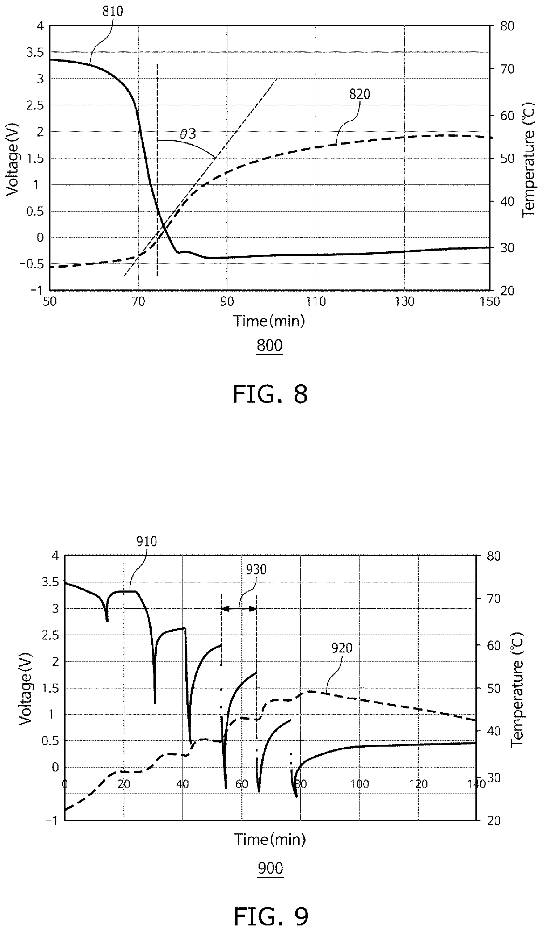

Referring to FIG. 8, the voltage and temperature profile 800 is an example profile showing changes in voltage 810 and temperature 820 of a secondary battery module (e.g., secondary battery module 510 in FIG. 5) when the secondary battery module is discharged at a constant 0.25 C current using the deactivation system. In this case, the secondary battery module may be overdischarged after being discharged to a discharge target state of charge (e.g., 20% SOC). In this case, the peak of temperature 820 generated by overdischarging the secondary battery can be reduced to about 55 degrees. For example, the heat of the secondary battery generated by the overdischarge can be reduced under a lower constant current discharge condition.

Referring to FIGS. 6 to 8, it can be confirmed that the slope angle of the graphs of temperature in the section where the temperature rises rapidly while the voltage of the secondary battery drops rapidly increases as the value of the constant current decreases (i.e., angle θ1 < angle θ2 < angle 83). For example, the lower the value of constant current provided by the deactivation system, the longer the time it takes for the output voltage of the secondary battery to reach the voltage minimum point, and the heating temperature of the secondary battery due to the overdischarge may decrease.

Referring to FIG. 9, the voltage and temperature profile 900 is an example profile showing changes in voltage 910 and temperature 920 of a secondary battery module (e.g., secondary battery module 510 in FIG. 5) when the secondary battery module is discharged in multiple stages using the deactivation system. In some embodiments, the discharge conditions set in the deactivation system may include a first potential and a second potential lower than the first potential. In this case, the secondary battery may be discharged to the first potential at a first constant current. Thereafter, the discharge of the secondary battery may be halted for the pause time 930. Further, the secondary battery may be discharged to the second potential at a second constant current. In some embodiments, the magnitude of the second constant current may be smaller than that of the first constant current.

In some embodiments, the secondary battery may be discharged at a predetermined constant current for a predetermined discharge time. Thereafter, the discharge of the secondary battery may be halted for a predetermined pause time 930. In some embodiments, the discharge time may be shorter than the pause time 930.

For example, referring to FIG. 9, a secondary battery module in a 100% state of charge may be discharged to 2.8 V at a constant 1.0 C current using the deactivation system. Thereafter, the discharge of the secondary battery may be halted for 10 minutes. Thereafter, the secondary battery module may be discharged to 1.5 V at a constant 0.5 C current. Further, the deactivation system may be overdischarged to the voltage minimum point by repeating two or more times of discharging the secondary battery module at a 0.5 C current for a discharge time (e.g., 2 minutes, etc.) and halting the discharge for a pause time 930 (e.g., 10 minutes, etc.).

Referring to FIGS. 8 and 9, by providing the pause time 930 one or more times in the middle of the discharge section of the secondary battery even if the value of the constant current is high, the overdischarge of the secondary battery can be performed in a shorter time, and the heat of the secondary battery generated by the overdischarge can be reduced.

It has been described in relation to FIG. 9 that the secondary battery was overdischarged using the discharge pattern that includes the constant current discharge section, the discharge target potential, the magnitude of the discharge current, the discharge time, and the pause time 930, but the disclosure is not limited thereto. For example, in order to control the heating temperature of the secondary battery within a range that does not cause stability issues, the secondary battery may be overdischarged using a discharge pattern such as various constant current (CC) discharges, constant voltage (CV) discharges, constant current-constant voltage (CC-CV) discharges, multi-stage constant current (CC) discharges with pause periods, multi-stage constant voltage (CV) discharges, or multi-stage constant current-constant voltage (CC-CV) discharges.

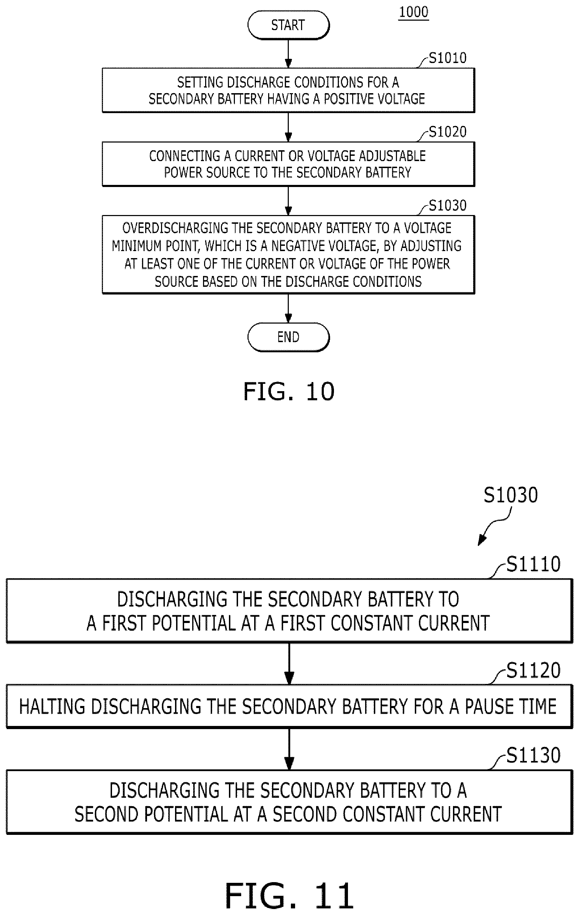

FIG. 10 is a flowchart showing an example of a secondary battery deactivation method 1000 in accordance with some embodiments of the present disclosure. In some embodiments, the method 1000 may begin with a deactivation system (or processor) setting discharge conditions for a secondary battery having a positive voltage (act S1010). Further, a current or voltage adjustable power source of the deactivation system may be connected to the secondary battery (act S1020). Moreover, an overdischarge protection circuit may be removed from the secondary battery before connecting the power source to the secondary battery.

Thereafter, the deactivation system may overdischarge the secondary battery to a voltage minimum point, which may be a negative voltage, by adjusting at least one of the current or voltage of the power source based on the discharge conditions (act S1030). For example, the secondary battery may be overdischarged at a constant current and/or a constant voltage to the voltage minimum point based on the discharge conditions. In some embodiments, the discharge conditions may include a C-rate of 0.25 C to 1.00 C.

In some embodiments, a heat dissipation device may be connected to the secondary battery before overdischarging to the voltage minimum point. Here, the heat dissipation device may include at least one of a heat dissipation pad, a heat pump, or a heat dissipation fin.

In some embodiments, the discharge conditions may include a discharge pattern including one or more constant current discharge sections or constant voltage discharge sections, the magnitude of a discharge current, a discharge time, and a pause time. Moreover, the discharge conditions may further include a discharge target state of charge (SOC). In this case, the secondary battery may be discharged to the discharge target state of charge before overdischarging to the voltage minimum point.

In some embodiments, the anode base material of the secondary battery may include copper (Cu). In this case, the voltage minimum point may be lower than the elution potential of the anode base material. Further, the voltage minimum point may be an inflection point where the voltage of the secondary battery transitions from falling to rising during the discharge of the secondary battery.

FIG. 11 is a flowchart showing an example of a secondary battery overdischarge method S1030 in accordance with some embodiments of the present disclosure. The secondary battery overdischarge method S1030 may be performed as act S1030 or as part of act S1030 shown in FIG. 10. In some embodiments, the discharge conditions may include a discharge pattern including one or more constant current discharge sections or constant voltage discharge sections, the magnitude of a discharge current, a discharge time, and a pause time. Moreover, the discharge conditions may further include a first potential and a second potential lower than the first potential. In this case, the method S1030 may begin with a deactivation system (or processor) discharging the secondary battery to the first potential at a first constant current (act S1110). Thereafter, the deactivation system may halt discharging the secondary battery for the pause time (act S1120). Further, the deactivation system may discharge the secondary battery to the second potential at a second constant current (act S1130). In some embodiments, the magnitude of the second constant current may be smaller than that of the first constant current.

For example, a secondary battery module in a 100% state of charge may be discharged to 2.8 V at a constant 1.0 C current using the deactivation system. Thereafter, the discharge of the secondary battery may be halted for 10 minutes. Thereafter, the secondary battery module may be discharged to 1.5 V at a constant 0.5 C current. Further, the deactivation system may be overdischarged to the voltage minimum point by repeating two or more times of discharging the secondary battery module at a 0.5 C current for a discharge time (e.g., 2 minutes, etc.) and halting the discharge for a pause time (e.g., 10 minutes, etc.).

In this way, by providing the pause time one or more times in the middle of the time section of discharging the secondary battery by the deactivation system, the overdischarge of the secondary battery can be performed in a shorter time, and the heat of the secondary battery generated by the overdischarge can be reduced.

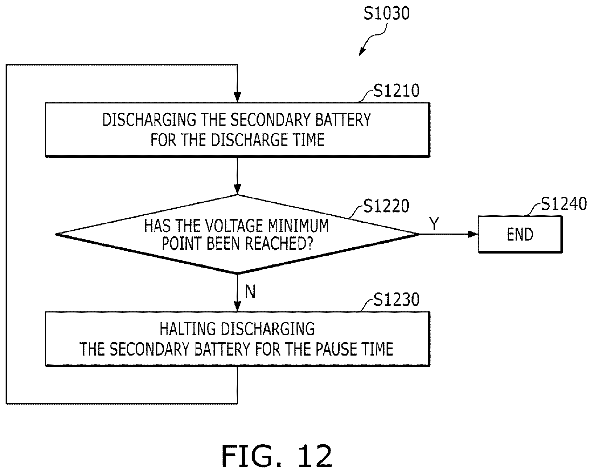

FIG. 12 is a flowchart showing an example of a secondary battery overdischarge method S1030 in accordance with some embodiments of the present disclosure. The secondary battery overdischarge method S1030 may be performed as act S1030 or as part of act S1030 shown in FIG. 10. In some embodiments, the discharge conditions may include a discharge pattern including one or more constant current discharge sections or constant voltage discharge sections, the magnitude of a discharge current, a discharge time, and a pause time. In this case, the method S1030 may begin with a deactivation system (or processor) discharging the secondary battery for the discharge time based on the discharge patterns (act S1210).

Thereafter, the deactivation system may determine whether the voltage of the secondary battery has reached a minimum point (act S1220). If the voltage of the secondary battery has reached the minimum point, the overdischarge step of the secondary battery may end (act S1240). If the voltage of the secondary battery has not reached the minimum point, the deactivation system may halt discharging the secondary battery for the pause time based on the discharge patterns (act S1230). Thereafter, the deactivation system may repetitively perform discharging the secondary battery for the discharge time based on the discharge patterns until the voltage of the secondary battery reaches the minimum point.

The methods described above may be provided as computer programs stored on a computer-readable recording (or storage) medium for execution on a computer (by a processor). When executed by the computer, the instructions may cause the computer (or processor) to deactivate a secondary battery by performing one or more methods described herein. The medium may continue to store computer-executable programs or temporarily store them for execution or download. Further, the medium may be a variety of recording or storage means in the form of a single piece of hardware or a combination of several pieces of hardware, and is not limited to media directly connected to a computer system but may be distributed over a network. Examples of media may be those configured to store program instructions, including magnetic media such as hard disks, floppy disks, and magnetic tapes, optical recording media such as CD-ROMs and DVDs, magneto-optical media such as floptical disks, ROM, RAM, flash memory, etc. Moreover, examples of other media may include recording or storage media managed by app stores that distribute applications, sites that supply or distribute various other software, servers, etc.

The methods, operations, or techniques of the present disclosure may be implemented by a variety of means. For example, these techniques may be implemented in hardware, firmware, software, or a combination thereof. Those skilled in the art will appreciate that the various example logic blocks, modules, circuits, and algorithm steps described in connection with the disclosure herein may be implemented in electronic hardware, computer software, or a combination of both. To clearly describe this interchangeability of hardware and software, the various example components, blocks, modules, circuits, and steps have been described above generally in terms of their functionality. Whether such functionality is implemented as hardware or software depends on the particular application and design requirements imposed on the overall system. Those skilled in the art may implement the described functionality in a variety of ways for each particular application, but such implementations should not be construed as departing from the scope of the present disclosure.

In hardware implementations, the processing units used to perform the techniques may be implemented within one or more ASICs, DSPs, graphical processing units (GPUs), digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computers, or combinations thereof.

Therefore, the various example logic blocks, modules, and circuits described in connection with the present disclosure may be implemented or performed in any combination of general-purpose processors, DSPs, ASICs, FPGAs or other programmable logic devices, discrete gate or transistor logic, discrete hardware components, or those designed to perform the functions described herein. The general-purpose processor may be a microprocessor, but in other examples, the processor may be any conventional processor, controller, microcontroller, or state machine. The processor may also be implemented as a combination of computing devices, for example, a combination of a DSP and a microprocessor, a plurality of microprocessors, one or more microprocessors in conjunction with a DSP core, or any other configurations.

In firmware and/or software implementations, the techniques may be implemented as instructions stored on a computer-readable medium such as random-access memory (RAM), read-only memory (ROM), non-volatile random-access memory (NVRAM), programmable read-only memory (PROM), erasable programmable read-only memory (EPROM), electrically erasable PROM (EEPROM), flash memory, compact discs (CDs), magnetic or optical data storage devices, etc. The instructions may be executable by one or more processors, and may cause the processor(s) to perform certain aspects of the functionality described in the present disclosure.

If implemented in software, the techniques may be stored on or transmitted via a computer-readable medium as one or more instructions or code. Computer-readable media include both computer storage media and communication media, including any medium that facilitates the transmission of a computer program from one place to another. The storage media may be any available media that can be accessed by a computer. By way of non-limiting example, the computer-readable media may include RAM, ROM, EEPROM, CD-ROM or other optical disc storages, magnetic disk storage or other magnetic storage devices, or any other media that can be used to transport or store the desired program code in the form of instructions or data structures and that can be accessed by a computer. Further, any appropriate access may be made to the computer-readable media.

For example, if the software is transmitted from websites, servers, or other remote sources using coaxial cables, fiber optic cables, twisted pair cables, digital subscriber lines (DSLs), or wireless technologies such as infrared, radio, and microwave, then the coaxial cables, fiber optic cables, twisted pair cables, digital subscriber lines, or wireless technologies such as infrared, radio, and microwave are intended to be included within the definition of media. As used herein, the disks and discs include CDs, laser discs, optical discs, digital versatile discs (DVDs), floppy disks, and Blu-ray discs, wherein the disks typically reproduce data magnetically, whereas the discs reproduce data optically using lasers. Combinations of the above should also be included within the scope of computer-readable media.

The software modules may reside in RAM memory, flash memory, ROM memory, EPROM memory, EEPROM memory, registers, a hard disk, a removable disk, a CD-ROM, or any other form of storage medium known. An example storage medium may be connected to the processor such that the processor can read information from or write information to the storage medium. In other examples, the storage medium may be integrated into the processor. The processor and storage medium may be present within an ASIC. The ASIC may be present within the user terminal. In other examples, the processor and storage medium may be present as separate components in the user terminal.

Although some embodiments have been described above as utilizing aspects of the presently disclosed subject matter in one or more standalone computer systems, the present disclosure is not limited thereto but may be implemented in conjunction with any computing environment, such as a network or distributed computing environment. Furthermore, aspects of the subject matter in the present disclosure may be implemented in a plurality of processing chips or devices, and storage may be affected similarly across a plurality of devices. These devices may include PCs, network servers, and portable devices.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

## Claims

1. A method (S1000) of deactivating a secondary battery (110), comprising:
setting (S1010) discharge conditions for a secondary battery (110) having a positive voltage;
connecting (S1020) a current or voltage adjustable power source to the secondary battery (110); and
overdischarging (S1030) the secondary battery (110) to a voltage minimum point, which is a negative voltage, by adjusting at least one of current or voltage of the current or voltage adjustable power source based on the discharge conditions.

2. The method (S1000) as claimed in claim 1, wherein the overdischarging (S1030) of the secondary battery (110) to the voltage minimum point comprises:
overdischarging the secondary battery (110) to the voltage minimum point at a constant current and/or a constant voltage based on the discharge conditions.

3. The method (S1000) according to any of the previous claims, wherein the discharge conditions comprise a C-rate of 0.25 C to 1.00 C.

4. The method (S1000) according to any of the previous claims, further comprising:
connecting a heat dissipation device (140) to the secondary battery (110), before the overdischarging (S1030) of the secondary battery (110) to the voltage minimum point.

5. The method (S1000) as claimed in claim 4, wherein the heat dissipation device (140) comprises at least one of a heat dissipation pad, a heat pump, or a heat dissipation fin.

6. The method (S1000) according to any of the previous claims, wherein the discharge conditions comprise a discharge pattern including one or more constant current discharge sections or constant voltage discharge sections, a magnitude of a discharge current, a discharge time, and a pause time.

7. The method (S1000) as claimed in claim 6, wherein the overdischarging (S1030) of the secondary battery (110) to the voltage minimum point comprises:
discharging the secondary battery (110) for the discharge time based on the discharge pattern; and
halting discharge of the secondary battery (110) for the pause time based on the discharge pattern.

8. The method (S1000) according to claims 6 or 7, wherein the discharge time is shorter than the pause time.

9. The method (S1000) according to any of claims 6 to 8, wherein the discharge conditions further comprise a first potential and a second potential lower than the first potential, and
wherein the overdischarging (S1030) of the secondary battery (110) to the voltage minimum point comprises:
discharging the secondary battery (110) to the first potential at a first constant current;
halting discharge of the secondary battery (110) for the pause time; and
discharging the secondary battery (110) to the second potential at a second constant current.

10. The method (S1000) as claimed in claim 9, wherein a magnitude of the second constant current is smaller than a magnitude of the first constant current.

11. The method (S1000) according to any of claims 6 to 10, wherein the discharge conditions further comprise a discharge target state of charge (SOC), and
wherein the method further comprises:
discharging the secondary battery (110) to the discharge target state of charge, before the overdischarging to the voltage minimum point.

12. The method (S1000) according to any of the previous claims, further comprising:
removing an overdischarge protection circuit from the secondary battery (110), before the connecting (S1020) of the current or voltage adjustable power source to the secondary battery (110).

13. The method (S1000) according to any of the previous claims, wherein an anode base material of the secondary battery (110) comprises copper (Cu).

14. The method (S1000) according to any of the previous claims, wherein the voltage minimum point is lower than an elution potential of an anode base material of the secondary battery (110).

15. The method (S1000) of the secondary battery (110), wherein the voltage minimum point is an inflection point where a voltage of the secondary battery (110) transitions from falling to rising during discharge of the secondary battery (110).
